# EUROPÄISCHE PATENTSCHRIFT

(11) **EP 1 494 903 B1**
(45) Veröffentlichungstag und Bekanntmachung des Hinweises auf die Patenterteilung: **17.09.2008**
(21) Anmeldenummer: 03722241.1
(22) Anmeldetag: 28.03.2003
(51) Int. Cl.: B60S 1/38, B60S 1/40

(54) **WISCHEBEL MIT EINEM ANGETRIEBENEN WISCHERARM UND EINEM AN DIESEM ANGELENKTEN WISCHBLATT ZUM REINIGEN VON SCHEIBEN INSBESONDERE VON KRAFTFAHRZEUGEN**
WIPER LEVER COMPRISING A WIPER ARM AND A WIPER BLADE WHICH IS CONNECTED TO THE SAME IN AN ARTICULATED MANNER, FOR CLEANING WINDOWS, ESPECIALLY WINDOWS PERTAINING TO MOTOR VEHICLES
LEVIER D'ESSUIE-GLACE MUNI D'UN BRAS D'ESSUIE-GLACE COMMANDE ET D'UN BALAI D'ESSUIE-GLACE ARTICULE DESSUS, POUR NETTOYER DES VITRES, EN PARTICULIER D'AUTOMOBILES

(30) Priorität: 04.04.2002 DE 10214956; 23.07.2002 DE 10233531; 08.08.2002 DE 10236385; 19.09.2002 DE 10243662; 12.12.2002 DE 10257991
(43) Veröffentlichungstag der Anmeldung: 12.01.2005
(73) Patentinhaber: ROBERT BOSCH GMBH, 70442 Stuttgart (DE)
(72) Erfinder: VERELST, Hubert, B-3300 Tienen (BE); WINDMOLDERS, Eric, B-3510 Kermt (BE); WILMS, Christian, B-3582 Beringen (Koersel) (BE); BEELEN, Hans, B-3540 Herk de Stad (BE); VERTONGEN, Robert, B-3800 Sinterueiten (BE)
(86) Internationale Anmeldenummer: PCT/DE2003/001033
(87) Internationale Veröffentlichungsnummer: WO 2003/084791

(56) Entgegenhaltungen:
- WO-A-02/40329
- DE-A- 3 709 810
- DE-A- 19 860 644

## Beschreibung

### Stand der Technik

Bei einem Wischhebel der im Oberbegriff des unabhängigen Anspruchs bezeichneten Art soll das Tragelement des Wischblatts über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt- werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die aufwendige, zur Verteilung des Anpressdrucks erforderliche Tragbügelkonstruktion mit zwei in der Wischleiste angeordneten, der Querversteifung der gummielastischen Wischleiste dienenden Federschienen, wie sie bei herkömmlichen Wischblättern praktiziert wird (DE-PS 1247 161).

Bei einem bekannten gattungsgemäßen Wischhebel WO-A-02/40329 ist die die Gelenkverbindung zwischen Wischerarm und Wischblatt überdeckende Abdeckkappe ausschließlich kraftschlüssig mit dem Wischblatt verrastet. Eine besondere Fixierung der Abdeckkappe in Längsrichtung des Wischblatts ist nicht vorgesehen. Um die Montagezeit - inklusive der erforderlichen Positionsbestimmung - der Abdeckkappe am Wischblatt möglichst kurz zu halten, muss das Maß für die Durchtrittsöffnung in Längsrichtung des Wischblatts mit einer hohen Plustoleranz versehen werden, damit die notwendige leichtgängige Schwingbewegung zwischen Wischerarm und Wischblatt nicht beeinträchtigt wird. Die sich dadurch ergebenden Spalte zwischen Wischerarm und dem Rand der Durchtrittsöffnung in der Abdeckkappe führen zu unerwünschten Fahrtwindgeräuschen und stören darüber hinaus den mit der Anordnung der Abdeckkappe angestrebten harmonischen Übergang zwischen Wischblatt und Wischerarm im Bereich der Gelenkverbindung.

### Vorteile der Erfindung

Bei dem Wischhebel mit den kennzeichnenden Merkmalen des Anspruchs 1 wird die Montage der Abdeckkappe am Wischblatt erheblich vereinfacht, weil durch die Anordnung von wenigstens zwei in einander entgegengesetzten Längsrichtungen des Wischblatts weisenden Anschlägen die vorschriftsmäßige Position der Abdeckkappe zwangsläufig festgelegt ist, wenn diese mit entsprechend ausgebildeten, mit den Anschlägen am Wischblatt zusammen arbeitenden Gegenanschlägen versehen ist. Die Toleranz für das Längsmaß der Durchtrittsöffnung kann dadurch minimiert werden, so dass durch die nun geringen Spaltmaße zwischen Wischerarm und dem Rand der Durchtrittsöffnung keine Nachteile mehr zu erwarten sind.

Besonders einfache und kostengünstige Gegenanschläge der Abdeckkappe ergeben sich, wenn diese an den schon vorhandenen Rastnasen der Abdeckkappe ausgebildet sind.

Wenn zum Tragelement ein an dessen konvex gekrümmter Bandfläche sitzendes Bauteil zum Anschließen des Wischblatts an den Wischerarm gehört, können die Anschläge des Tragelements direkt an diesem Bauteil ausgebildet sein, so dass die Anordnung besondere Anschläge entfallen kann.

Im Hinblick auf eine vereinfachte Montage des Wischblatts umgreift das Bauteil die Längskanten des Tragelements mit Haltekrallen, wobei die Anschläge an den Haltekrallen ausgebildet sind.

Um das Bauteil und damit auch die Abdeckkappe kompakt zu halten, hat das Bauteil zwei in Längsrichtung des Wischblatts mit Abstand voneinander befindliche Haltekrallen, deren einander zugewandte Wangen die Anschläge für die zwischen den Haltekrallen befindlichen Rastnasen der Abdeckkappe bilden.

Bei einer in bestimmten Anwendungsfällen zweckmäßigen Ausbildung des Tragelements mit zwei mit Abstand voneinander in einer gemeinsamen Ebene gleichgerichtet angeordneten Federschienen sind deren voneinander abgewandten äußeren Längskanten von den mit den Anschlägen des Tragelements versehenen Haltekrallen des Bauteils umgriffen. Auch hier werden zweckmäßig an den Haltekrallen des Bauteils die Anschläge des Tragelements ausgebildet.

Besonders vorteilhaft ist es, die Abdeckkappe aus einem elastischen Kunststoff herzustellen, so dass die an die Abdeckkappe angeformten Rastnasen durch entsprechende Formgebung unterstützt elastisch auslenkbar sind.

Weitere vorteilhafte Weiterbildung und Ausgestaltungen der Erfindung sind in der nachfolgenden Beschreibung eines in der dazugehörigen Zeichnung dargestellten Ausführungsbeispiels angegeben.

### Zeichnung

In der Zeichnung zeigen:
Figur 1 eine Seitenansicht eines Wischhebels, dessen Wischblatt mit einer Windabweisleiste versehen ist, unmaßstäblich dargestellt,
Figur 2 eine vergrößerte Darstellung einer in Figur 1 mit II bezeichneten Einzelheit in perspektivischer Darstellung,
Figur 3 einen Querschnitt durch die Anordnung gemäß Figur 2 entlang der Linie III-III geschnitten,
Figur 4 eine zum Wischhebel gehörende Abdeckkappe von oben gesehen und perspektivisch dargestellt,
Figur 5 eine perspektivisch Ansicht eines zum Wischblatt gehörenden Bauteils und dessen Anordnung auf einem strichpunktiert gezeichneten Tragelement des Wischblatts und Figur 6 eine unmaßstäbliche perspektivische Darstellung der Abdeckkappe gemäß Figur 4 von unten gesehen, mit strichpunktiert gezeichneter Anordnung eines zwei Federschienen aufweisenden Tragelements sowie mit den Endstücken von Haltekrallen des Bauteils gemäß Figur 5.

### Beschreibung des Ausführungsbeispiels

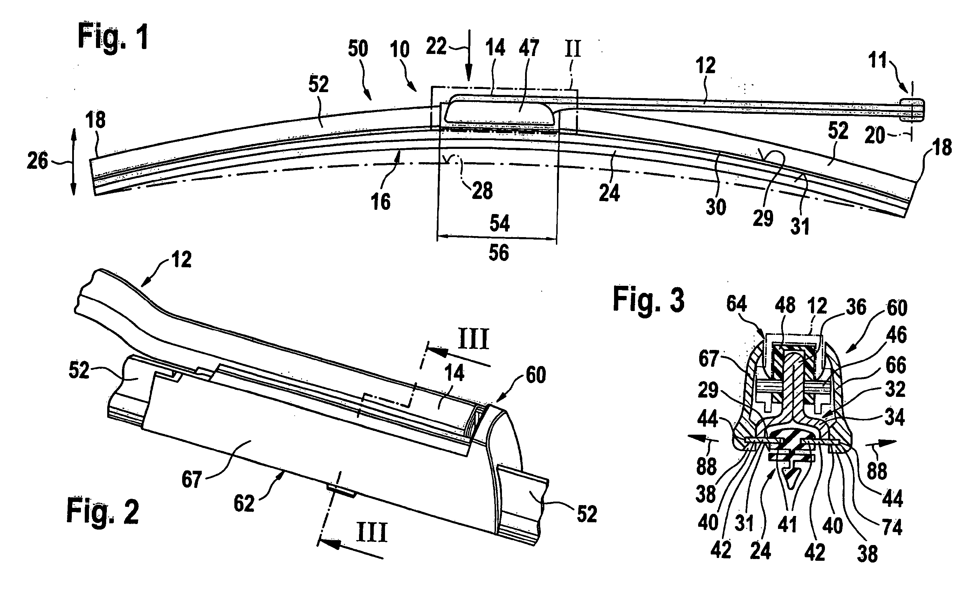

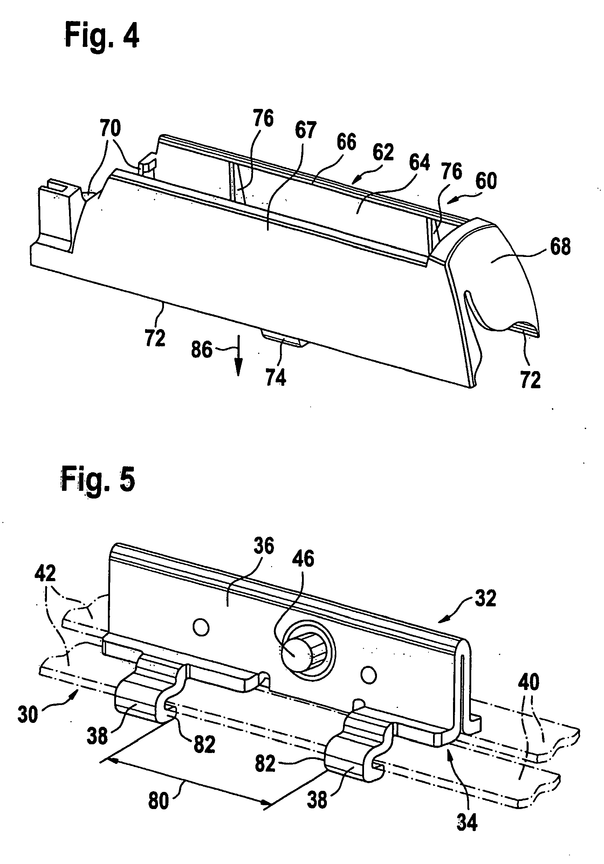

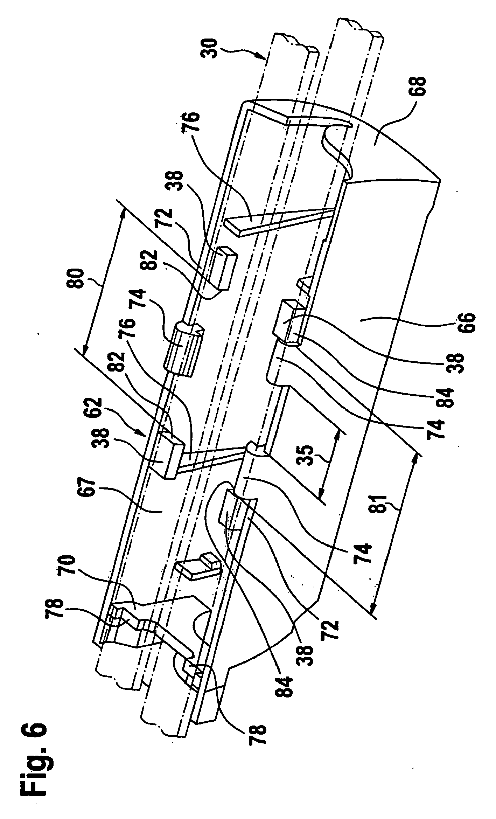

Zum erfindungsgemäßen Wischhebel 10 (Figur 9) gehört ein einendig an einem nicht dargestellten Kraftfahrzeug geführter, angetriebenen Wischerarm 12. Das angetriebene Ende des Wischerarms ist in Figur 1 mit der Bezugszahl 11 versehen worden. An dem anderen, freien Ende 14 des Wischerarms ist ein langgestrecktes, zum Wischhebel 10 gehörendes Wischblatt 16 angelenkt. Der Wischerarm 12 ist an seinem Antriebsende 11 so gelagert, dass er während des Wischbetriebs in einer auf der Zeichungsebene stehenden Ebene um eine Pendelachse 20 zwischen Umkehrlagen pendelbar ist. Dabei wird das Wischblatt 16 quer zu seiner Längserstreckung über die zu wischende Scheibe bewegt, wobei es mit einer gummielastischen Wischleiste 24 an der Oberfläche 28 einer zu wischenden Scheibe anliegt. Die Wischleiste 24 ist längsachsenparellel mit einem bandartig langgestreckten, federelastischen Tragelement 30 verbunden, an dessen von der Scheibe abgewandten oberen Bandfläche 29 ein Bauteil 32 sitzt (Figuren 3 und 5), über welches das Wischblatt 16 mit dem Wischerarm 12 zu Bildung des Wischhebels 10 gelenkig verbunden ist. Die Wischleiste 24 ist somit an der unteren, der Scheibe zugewandten Bandfläche 31 des Tragelements 30 angeordnet. Das abschnittsweise im Querschnitt T-förmige, auch als Gelenkteil zu bezeichnende Bauteil 32 ist mit seinem T-Kopf 34 dem Tragelement 30 zugewandt und umgreift mit am T-Kopf angeordneten Krallen 38 die voneinander abgewandten äußeren Längsstreifen 40 des Tragelements 30. Das Gelenkteil 32 wird an diesen Krallen mit dem Tragelement 30 fest verbunden, beispielsweise verschweißt und/oder durch Zusammenpressen der Krallen an diesem festgelegt. Das Tragelement 30 umfasst beim Ausführungsbeispiel zwei Federschienen 42, welche in einer gemeinsamen Ebene liegend sich wenigstens nahezu parallel zueinander erstrecken. Das Tragelement ist über seine Bandflächen 29, 31 so gekrümmt (Figur 1), dass die Wischleiste 24 sich an dessen konkav gekrümmter Bandfläche 31 befindet und das Gelenkteil 32 an der konvex gekrümmten Bandfläche 29 sitzt (Figur 1). Die einander zugewandten inneren Längsstreifen 41 der Federschienen 42 liegen in randoffenen Längsnuten 44 der Wischleiste 24. Der T-Fuß 36 des Kupplungsteils 32 erstreckt sich vom Tragelement 30 weg und ist von einem Gelenkbolzen 46 durchdrungen, von dem in den Figuren 3 und 5 dessen beiden aus dem T-Fuß ragenden Enden sichtbar sind. An diesem Gelenkbolzen beziehungsweise an dessen freiliegenden Enden greift der Wischerarm 12 (in Figur 3 strichpunktiert gezeichnet) mit entsprechend ausgebildeten Lagerausnehmungen an. Zwischen dem T-Fuß 36 und dem Wischerarm 12 befindet sich noch ein vorzugsweise aus einem Kunststoff hergestellter Adapter 48, über welchen eine betriebssichere, lösbare Verbindung zwischen Wischerarm 12 und Wischblatt 16 zur Bildung des Wischhebels 10 sicher gestellt ist. Aus Figur 3 ist ersichtlich, dass der Gelenkbolzen 46 beziehungsweise dessen Gelenkachse 47 sich im wesentlichen in Richtung der Pendel- oder Arbeitsbewegung des Wischhebels 10 erstreckt. Wie Figur 1 zeigt, ist die zu wischende Oberfläche 28 der Scheibe gekrümmt. Da die Linie 28 die stärkste Krümmung der Scheibenoberfläche darstellen soll ist klar ersichtlich, dass die Krümmung des mit seinen beiden Enden 18 an der Scheibenoberfläche 28 anliegenden, noch unbelasteten Wischblatt 16 stärker ist als die maximale Scheibenkrümmung. Unter einem über den Wischerarm 12 ausgeübten, in Richtung des Pfeiles 22 (Figur 1) wirkenden Anpressdrucks legt sich das Wischblatt mit seiner an der unteren Bandfläche 31 des Tragelements angeordneten gummielastischen Wischleiste 24 über seine gesamte Länge an der Scheibenoberfläche 28 an. Dabei baut sich im aus Metall gefertigten, federelastischen Tragelement 30 eine Spannung auf, welche für eine ordnungsgemäße Anlage der Wischleiste 24 über deren gesamte Länge an der Scheibe sowie für eine gleichmäßige Verteilung des Anpressdrucks 22 sorgt. Weiter sorgt das Tragelement 30 mit seiner Federschienen 24 für die notwendige Querstabilisierung der gummielastischen Wischleiste 24. Weil die in aller Regel sphärisch gekrümmte Scheibe nicht einen Abschnitt einer Kugeloberfläche darstellt, muss sich das Wischblatt 16 gegenüber dem Wischerarm 12 während seiner Wischbewegung ständig der jeweiligen Lage und dem Verlauf der Scheibenoberfläche 28 anpassen können. Deshalb ist die eine Schwingbewegung (Doppelpfeil 26 in Figur 1) um die Gelenkzapfenachse 47 ermöglichende leichtgängig Gelenkverbindung zwischen dem Wischerarm 12 und dem Wischblatt 16 notwendig. Weiter ist aus den Figuren 1 und 4 zu entnehmen, das die Gelenkachse 47 auch quer zur Richtung der Anlegekraft (Pfeil 22) ausgerichtet ist. Die Figuren 1 und 2 zeigen, dass das Wischblatt an der oberen Bandfläche 29 des Tragelements 30 mit einer beispielsweise mit der Wischleiste 24 verbundenen Windabweisleiste 50 versehen ist, welche zwei Teilabschnitte 52 umfasst, die in Längsrichtung des Wischblatts gesehen mit einem Abstand 54 voneinander liegen (Figur 1). Es ergibt sich somit eine Aussparung 56 in der Windabweisleiste 50, welche die Anordnung des Gelenkteils 32 am Tragelement 30 ermöglicht. Die Windabweisleiste 50 ist an ihrer einen, vom Fahrtwind hauptsächlich angeströmten Längsseite mit einer Anströmkehlung versehen. Um die Gelenkverbindung zwischen dem Wischerarm 10 und dem Wischblatt 12 beziehungsweise zwischen dessen Gelenkteil 32 abzudecken und einen harmonischen Übergang zwischen den einander zugewandten Enden der Teilabschnitte 52 der Windabweisleiste 50 zu erreichen, gehört zum Wischhebel 10 noch eine Abdeckkappe 60, deren Aufbau insbesondere anhand der Figuren 3, 4 und 6 erläutert werden soll. Sie hat einen trogförmigen Mittelabschnitt 62, dessen Trogboden weitgehend entfernt ist, so dass sich eine Durchtrittsöffnung 64 für das freie Ende 14 des Wischerarms ergibt. Die Abdeckkappe hat somit zwei Längswände 66 und 67, die an ihren einen Enden durch eine Stirnwand 68 und deren andere Enden durch eine Querstrebe 70 miteinander verbunden sind. Die beiden Längswände 66, 67 der aus einem elastischen Kunststoff hergestellten Abdeckkappe 60 sind an ihren dem Tragelement 30 zugewandten Längsrändern 72 mit elastisch auslenkbaren Rastmitteln versehen, welche beim Ausführungsbeispiel als Rastnasen 74 ausgebildet sind. Dabei sind an der einen Längswand 66 zwei mit einem Abstand 75 voneinander befindliche Rastnasen 74 angeordnet. Am Längsrand 72 der anderen Längswand 67 befindet sich eine Rastnase 74, die - bezogen auf die beiden Rastnasen an der Längswand 66 - zwischen den beiden Rastnasen 74 die Längswand 66 befindet. Weiter sind an jeder Längswand Stütz- oder Versteifungsrippen 76 angeordnet, die sich im wesentlichen von der Durchtrittsöffnung 64 aus bis nahe an die Längsränder 72 der Längswände 66, 67 erstrecken. An den den Rändern 72 zugewandten Enden der Stützrippen 76 sind diese passend auf die Breite des Tragelements 30 ausgespart, so dass sich Abstützungen 78 ergeben (Figur 6).

Wie schon erwähnt sind die Krallen 38 des Gelenkteils 32 in Längsrichtung gesehen mit Abstand voneinander angeordnet, so dass sich ein Zwischenraum 80 zwischen den beiden an der selben Seite des Gelenkteils 32 befindlichen Krallen ergibt. Der Zwischenraum 80 wird also durch einander zugewandten wangenartigen Stirnseiten 82 der Haltekrallen 38 begrenzt (Figur 5). Dies ist auch aus Figur 6 zu entnehmen, wo die Enden der Krallen 38 zum besseren Verständnis der Erfindung eingezeichnet sind. Um eine einfache, exakte Positionierung der Abdeckkappe 60 am Tragelement 30 zu erreichen, benutzt die Erfindung beim Ausführungsbeispiel die einander zugewandten Stirnseiten 82 der Haltekrallen 38 als Positionierungsschultern oder Positionierungshilfen, die im Zusammenwirken mit den voneinander abgewandten Stirnflächen 84 der Rastnasen 74 die vorschriftsmäßige Montageposition der Abdeckkappe am Tragelement 30 beziehungsweise am Wischblatt 16 festlegen. Dies ist deshalb möglich, weil das Gelenkteil 32 - wie schon erläutert- mit dem Tragelement 30 beziehungsweise mit dessen Federschienen 42 fest verbunden ist. Die voneinander abgewandten Stirnflächen 84 der Rastnasen 74 weisen somit einen Abstand 81 voneinander auf, der passend auf das Maß des Zwischenraums 80 zwischen den Stirnseiten oder Wangen 82 der Haltekrallen 38 abgestimmt ist. Die Stirnseiten 82 der Haltekrallen 38 bilden somit zwei in einander entgegengesetzte Längsrichtungen des Wischblatts weisende Anschläge, denen die als Gegenanschläge wirkenden Stirnflächen 84 der Kappen-Rastnasen 74 als Paßschultern zugeordnet sind.

Es versteht sich von selbst, dass die beim Ausführungsbeispiel gezeigte Anordnung der Rastnasen in Bezug auf die Haltekrallen nur eine von mehreren Möglichkeiten zur Realisierung der Erfindung darstellt. Selbstverständlich ist es möglich, die Rastnasen der Abdeckkappe auch an den beiden voneinander abgewandten Stirnseiten der Haltekrallen zu positionieren. Weiter ist es denkbar, wenigstens zwei Rastnasen der Abdeckkappe mit einer einzigen Haltekralle in Wirkverbindung zu bringen, in dem beidseitig einer solchen Haltekralle je eine Rastnase angeordnet ist. Weiter ist es natürlich auch denkbar, auch an der Längswand 67 anstelle einer einzigen Rastnase mehrere Rastnasen anzuordnen, welche ebenfalls als Positionierungshilfen verwendet werden können. Auch kann es sinnvoll sein, die Abdeckkappe 60 an ihren beiden Längsrändern 72 jeweils mit nur einer einzigen Rastnase zu versehen, deren Längserstreckung auf das Maß des Zwischenraumes 80 abgestimmt ist. Eine ordnungsgemäße Positionierung der Abdeckkappe am Tragelement beziehungsweise am Wischblatt wird also stets dadurch erreicht, dass das Tragelement wenigstens zwei jeweils in einander entgegengesetzte Längsrichtungen des Wischblatts weisende Anschläge hat, denen entsprechende Gegenanschläge der Abdeckkappe zugeordnet sind.

Zu ihrer Anbringung am Tragelement wird die Abdeckkappe in Bezug auf das Wischblatt in eine Position gebracht, die in den Figuren 4 und 5 dargestellt ist. Aus dieser Vormontageposition heraus wird die Abdeckkappe 60 in Richtung des Pfeils 86 auf das Wischblatt aufgesetzt. Während dieser Aufsetzbewegung lenken die Rastnasen 74 aufgrund ihrer Formgebung, beispielsweise der Anformung von Anlaufschrägen in Richtung der Pfeile 88 in Figur 3 aus, wenn die Anlaufschrägen gegen die äußeren Längsstreifen 40 des Tragelements 30 stoßen. Diese Auslenkung kann entweder durch bestimmte, dem Fachmann bekannte Querschnittsveränderungen der Rastnasen und /oder durch eine elastische Auslenkung der Längswände 66, 67 der Abdeckkappe 60 erreicht werden. Die Montagebewegung (Pfeil 86) der Abdeckkappe ist beendet, wenn die Abstützungen 78 an den Stützrippen 76 an der oberen Bandfläche 29 des Tragelements 30 aufsitzen. In dieser Position können die Rastnasen 74 wieder in ihre Ausgangsposition zurückfedern, weil die äußeren Längsstreifen 40 des Tragelements 30 in Hinterschnitte der Rastnasen gelangen können, wobei die Rastnasen das Tragelement untergreifen und somit einen sicheren Sitz der Abdeckkappe 60 am Wischblatt 16 bewirken.

Nachdem die Abdeckkappe mit dem Wischblatt verbunden ist, kann die weitere Montage des Wischhebels 10 erfolgen, indem das freie Ende 14 des Wischerarms 12 durch die Durchtrittsöffnung 64 hindurchgeführt und die Gelenkverbindung zwischen Wischerarm 12 und Wischblatt 16 hergestellt wird.

## Patentansprüche

1. Wischhebel (10) mit einem angetriebenen Wischerarm (12) und einem an diesen angelenkten Wischblatt (16) zum Reinigen von Scheiben, insbesondere von Kraftfahrzeugen, das mit einem bandartig langgestreckten, federelastischen, über seine Bandflächen gekrümmten Tragelement (30) versehen ist, welches an seiner konkav gekrümmten Bandfläche (31) eine langgestreckte, gummielastische Wischleiste (24) aufweist und an dessen konvex gekrümmten Bandfläche (29) ein Bauteil (32) zum Anschließen des Wischblatts (16) an den Wischerarm (12) sitzt, wobei zum Wischhebel (10) eine mit elastisch auslenkbaren Rastmitteln (74) versehene, am Tragelement (30) des Wischblatts (16) verrastbare Kappe (60) zum Abdecken des Anschlussbereichs zwischen Wischblatt und Wischerarm gehört, **dadurch gekennzeichnet, dass** das Tragelement (30) mit wenigstens zwei jeweils in einander entgegengesetzte Längsrichtungen des Wischblatts (16) weisenden Anschlägen versehen ist, denen entsprechende Gegenanschläge der Abdeckkappe (60) zugeordnet sind.

2. Wischhebel nach Anspruch 1, **dadurch gekennzeichnet, dass** die Gegenanschläge der Abdeckkappe (60) an den Rastnasen (74) ausgebildet sind.

3. Wischhebel nach einem der Ansprüche 1 oder 2, **dadurch gekennzeichnet, dass** zum Tragelement (30) ein an dessen konvex gekrümmter Bandfläche (29) sitzendes Bauteil (32) zum Anschließen des Wischblatts (16) an den Wischerarm (12) gehört, an dem die Anschläge (82) des Tragelements ausgebildet sind.

4. Wischhebel nach Anspruch 3, **dadurch gekennzeichnet, dass** das Bauteil (32) die Längskanten (40) des Tragelements (30) mit Haltekrallen (38) umgreift und dass die Anschläge an den Haltekrallen des Bauteils ausgebildet sind.

5. Wischhebel nach Anspruch 4, **dadurch gekennzeichnet, dass** das Bauteil (32) zwei in Längsrichtung des Wischblatts mit Abstand (80) voneinander befindliche Haltekrallen (38) hat, deren einander zugewandten Wangen (82) die Anschläge für die zwischen den Haltekrallen befindlichen Rastnasen (74) der Abdeckkappe (60) bilden.

6. Wischhebel nach einem der Ansprüche 4 oder 5, **dadurch gekennzeichnet, dass** das Tragelement (30) zwei mit Abstand voneinander, in einer gemeinsamen Ebene gleichgerichtet angeordnete Federschienen (42) aufweist, deren voneinander abgewandten äußeren Längskanten (40) von den mit den Anschlägen (82) des Tragelements versehenen Haltekrallen (38) des Bauteils (32) umgriffen sind.

7. Wischhebel nach einem der Ansprüche 1 bis 6, **dadurch gekennzeichnet, dass** die Abdeckkappe (60) aus einem elastischen Kunststoff besteht.

8. Wischhebel nach einem der Ansprüche 1 bis 7, **dadurch gekennzeichnet, dass** das Bauteil (32) in einem Längsmittelbereich des Tragelements angeordnet ist und beidseitig des Bauteils sich zu den Enden des Tragelements erstreckende Windabweisleisten-Abschnitte (52) angeordnet sind

9. Wischblatt mit Kappe zur Verwendung mit einem Wischhebel nach Anspruch 1.

## Claims

1. Wiper lever (10) comprising a driven wiper arm (12) and a wiper blade (16), which is connected to the same in an articulated manner, for cleaning windows, especially windows pertaining to motor vehicles, the wiper lever being provided with a spring-elastic supporting element (30) which is elongate in the manner of a band, is curved over its band surfaces and, on its concavely curved band surface (31), has an elongate, rubber-elastic wiper strip (24) and, on it convexly curved band surface (29), has a component (32) for connecting the wiper blade (16) to the wiper arm (12), wherein the wiper lever (10) includes a cap (60) which is provided with elastically deflectable latching means (74), can be latched to the supporting element (30) of the wiper blade (16) and is intended for covering the connection region between wiper blade and wiper arm, **characterized in that** the supporting element (30) is provided with at least two stops which each point in mutually opposite longitudinal directions of the wiper blade (16) and which are assigned corresponding counter-stops of the covering cap (60).

2. Wiper lever according to Claim 1, **characterized in that** the counter-stops of the covering cap (60) are formed on the latching lugs (74).

3. Wiper lever according to either of Claims 1 and 2, **characterized in that** the supporting element (30) includes a component (32) which sits on the convexly curved band surface (29) thereof, is intended for connecting the wiper blade (16) to the wiper arm (12) and on which the stops (82) of the supporting element are formed.

4. Wiper lever according to Claim 3, **characterized in that** the component (32) reaches with retaining claws (38) around the longitudinal edges (40) of the supporting element (30), and **in that** the stops are formed on the retaining claws of the component.

5. Wiper lever according to Claim 4, **characterized in that** the component (32) has two retaining claws (38) which are located at a distance (80) from each other in the longitudinal direction of the wiper blade and the mutually facing cheeks (82) of which form the stops for the latching lugs (74) of the covering cap (60), which latching lugs are located between the retaining claws.

6. Wiper lever according to either of Claims 4 and 5, **characterized in that** the supporting element (30) has two spring rails (42) which are arranged at a distance from each other and such that they act in the same direction in a common plane and the mutually remote, outer longitudinal edges (40) of which are reached around by the retaining claws (38) of the component (32), which retaining claws are provided with the stops (82) of the supporting element.

7. Wiper lever according to one of Claims 1 to 6, **characterized in that** the covering cap (60) is composed of a flexible plastic.

8. Wiper lever according to one of Claims 1 to 7, **characterized in that** the component (32) is arranged in a longitudinal central region of the supporting element and wind-deflecting-strip sections (52) extending to the ends of the supporting element are arranged on both sides of the component.

9. Wiper blade with a cap for use with a wiper lever according to Claim 1.

## Revendications

1. Levier d'essuie-glace (10) comportant un bras d'essuie-glace (12), entraîné et une raclette d'essuie-glace (16) articulée sur ce bras pour nettoyer des vitres notamment des vitres de véhicules automobiles, cette raclette ayant un élément de support (30) en forme de bande allongée, élastique comme un ressort, et dont les surfaces sont cintrées, la surface de bande (30), cintrée de manière concave portant une lame d'essuyage (24) allongée, élastique comme du caoutchouc et dont la surface de bande (29) cintrée de manière convexe, comporte une pièce (32) pour relier la raclette d'essuie-glace (16) au bras d'essuie-glace (12), et le levier d'essuie-glace (10) comporte un capuchon (60) muni de moyens d'accrochage (74), susceptibles d'être déformés élastiquement, pour être accrochés à l'élément de support (30) du balai d'essuie-glace (16), pour couvrir la zone de raccordement entre la raclette d'essuie-glace et le bras d'essuie-glace,
**caractérisé en ce que**
l'élément de support (30) comporte au moins deux butées tournées dans des directions longitudinales opposées de la raclette d'essuie-glace (16), et auxquelles sont associées des contrebutées du capuchon (60).

2. Levier d'essuie-glace selon la revendication 1,
**caractérisé en ce que**
les contrebutées du capuchon (60) sont formées sur les becs d'enclipsage (74).

3. Levier d'essuie-glace selon la revendication 1 ou 2,
**caractérisé par**
une pièce (32) portée par la surface de bande (29) de cintrage convexe de l'élément de support (30) pour relier la raclette d'essuie-glace (16) au bras d'essuie-glace (12) et qui comporte les butées (82) de l'élément de support.

4. Levier d'essuie-glace selon la revendication 3,
**caractérisé en ce que**
la pièce (32) qui entoure les arêtes longitudinales (40) de l'élément de support (30) comportent des griffes de retenue (38), et des butées sont réalisées sur les griffes de retenue de la pièce.

5. Levier d'essuie-glace selon la revendication 4,
**caractérisé en ce que**
la pièce (32) comporte deux griffes de retenue (38) écartées de la distance (80) dans la direction longitudinale de la raclette d'essuie-glace et dont les extrémités (82) tournées l'une vers l'autre forment les butées pour les becs d'enclipsage (74) du capuchon (60) qui se trouvent entre les griffes de retenue.

6. Levier d'essuie-glace selon la revendication 4 ou 5,
**caractérisé en ce que**
l'élément de support (30) comporte deux rails élastiques (42) écartés l'un de l'autre et dirigés dans un plan commun, et dont les arêtes longitudinales extérieures (40), écartées l'une de l'autre, sont entourées par les griffes de retenue (38) de la pièce (32) munie des butées (82) de l'élément de support.

7. Levier d'essuie-glace selon l'une des revendications 1 à 6,
**caractérisé en ce que**
le capuchon (60) est en une matière plastique élastique.

8. Levier d'essuie-glace selon l'une des revendications 1 à 7,
**caractérisé en ce que**
la pièce (32) est installée dans la zone médiane longitudinale de l'élément de support et des segments de déflecteur (82) de part et d'autre de la pièce arrivent jusqu'aux extrémités de l'élément de support.

9. Raclette d'essuie-glace comportant un capuchon destiné à un levier d'essuie-glace selon la revendication 1,
